# EUROPÄISCHE PATENTANMELDUNG

(11) **EP 1 093 976 A2**
(43) Veröffentlichungstag der Anmeldung: **25.04.2001**
(21) Anmeldenummer: 00113863.5
(22) Anmeldetag: 30.06.2000
(51) Int. Cl.: B60R 21/02

(54) **Trennelement für ein Fahrzeug**

(30) Priorität: 19.10.1999 DE 29918270 U; 12.05.2000 DE 20008579 U
(71) Anmelder: Oster, Kurt, 42781 Haan (DE)
(72) Erfinder: Oster, Kurt, 42781 Haan (DE)
(74) Vertreter: Cohausz & Florack

(57) **Zusammenfassung**

Dargestellt und beschrieben wird ein Trennelement (1) für ein Fahrzeug, insbesondere für den Fahrzeugtyp "Kombi", wobei das Fahrzeug aufgrund seines Fahrzeugtyps zwischen seinem Gepäckraum und seinem Fahrgastraum eine Öffnung aufweist. Bei einem derartigen Trennelement (1) wird das Eindringen von Schmutz und Geruch in den Fahrgastraum wirksam verhindert, indem das Trennelement (1) die Öffnung im wesentlichen verschließt.

## Beschreibung

Die Erfindung betrifft ein Trennelement für ein Fahrzeug, insbesondere für den Fahrzeugtyp "Kombi", wobei das Fahrzeug aufgrund seines Fahrzeugtyps zwischen seinem Gepäckraum und seinem Fahrgastraum eine Öffnung aufweist.

Fahrzeuge des Fahrzeugtyps "Kombi" weisen in der Regel einen großen, gemeinsamen Innenraum auf, der durch die Rückenlehne einer Rückbank in einen Fahrgastraum, in dem die Fahrgäste transportiert werden, und einen Gepäckraum unterteilt wird. Die Rückenlehne nimmt dabei nur einen Teil des vertikalen Querschnitts des Innenraums ein. Der Zwischenraum zwischen der Oberkante der Rückenlehne und dem Dachhimmel des Innenraums des Fahrzeuges verbleibt als Öffnung zwischen dem Fahrgastraum und dem Gepäckraum.

Andere Fahrzeuge, die zwischen ihrem Gepäckraum und ihrem Fahrgastraum eine Öffnung aufweisen, können beispielsweise Kleintransporter, Lieferwagen oder Limousinen mit umgeklappter Rückenlehne der Rückbank sein.

Fahrzeuge dieses Typs, insbesondere Kombis, werden häufig von Tierhaltern, beispielsweise Hundebesitzern, verwendet, um das Tier im Gepäckraum zu transportieren. Um zu verhindern, daß das Tier durch die Öffnung zwischen dem Fahrgastraum und dem Gepäckraum in den Fahrgastraum gelangen kann und dort die Aufmerksamkeit des Fahrers beeinträchtigt oder den Fahrgastraum verschmutzt, ist es bekannt, die Öffnung mit einem als Fangnetz ausgebildeten Trennelement zu verschließen. Dieses Fangnetz wird mit geeigneten Mitteln über die Öffnung gespannt und weist eine Maschengröße auf, die wirksam verhindert, daß das Tier den Gepäckraum zum Fahrgastraum hin verlassen kann.

Nachteilig an diesen Fangnetzen, die regelmäßig großmaschig ausgeführt sind, ist, daß Dreck, insbesondere Haare des Tieres, durch das Netz in den Fahrgastraum gelangen. Zudem kann durch das Tier eine Geruchsbelästigung entstehen, die sich von dem Fangnetz ungehindert in den Fahrgastraum erstrecken kann. Das bekannte Fangnetz kommt demnach seiner Aufgabe nach, zu verhindern, daß das Tier als solches in den Fahrgastraum gelangt und diesen verdreckt, es kann jedoch nicht verhindern, daß Dreck und eine von dem Tier ausgehende Geruchsbelästigung in den Fahrgastraum gelangen.

Insbesondere Dreck führt zu einer Wertminderung des Fahrzeugs, so daß Fahrzeuge von Tierhaltern, die die Tiere regelmäßig mit dem Fahrzeug transportiert haben, gegenüber vergleichbaren Fahrzeugen von Nichttierhaltern nur mit vermindertem Wert weiterverkauft werden können.

Aus DE 196 17 454 A1 ist ferner ein Schutzgitter, bzw. eine Trennwand für den Innenraum von Kraftfahrzeugen bekannt, das bzw. die in einem Fahrzeug zwischen Fahrgastbereich und Ladebereich angebracht wird. Das bekannte Schutzgitter befindet sich, mittels an seinem Rahmen angebrachter Stützen an den Holmen des Fahrzeugs vertikal abgestützt, in einem gewissen Abstand hinter der Rückenlehne.

Vor diesem Hintergrund liegt der vorliegenden Erfindung das technische Problem zugrunde, ein Trennelement für ein eingangs näher beschriebenes Fahrzeug vorzuschlagen, daß das Eindringen von Schmutz und Geruch in den Fahrgastraum wirksam verhindert.

Das zuvor aufgezeigte technische Problem wird durch ein Trennelement gelöst, daß die Öffnung im wesentlichen verschließt.

Mit dem erfindungsgemäßen Trennelement wird die bei den Serienfahrzeugen des oben genannten Fahrzeugtyps stets vorhandene Öffnung im wesentlichen verschlossen, so daß der Gepäckraum nahezu vollständig von dem Fahrgastraum getrennt ist und einen eigenen, nahezu abgeschlossenen Raum bildet. Dreck und Gerüche können aus diesem abgeschlossenen Raum nicht mehr in den Fahrgastraum gelangen. Auf diese Weise wird der Wert des Fahrzeugs nicht unverhältnismäßig gemindert.

Das erfindungsgemäße Trennelement kann derart ausgestaltet sein, daß es die Öffnung vollständig verschließt, also eine äußere Kontur aufweist, die dem Verlauf des Rands der Öffnung exakt entspricht.

In einer bevorzugten Ausgestaltung der Erfindung ist es jedoch auch denkbar, daß das Trennelement die Öffnung lediglich im wesentlichen geruchs- und/oder schmutzdicht verschließt. Es hat sich gezeigt, daß ein ausreichender Geruchs- und Schmutzschutz erzielt werden kann, wenn die äußere Kontur des Trennelements derart gewählt wird, daß es dem Tier nicht mehr gelingen kann, Teile seines Körpers, wie beispielsweise die Schnauze oder die Pfote, beispielsweise durch einen Spalt zwischen dem Trennelement und dem Rand der Öffnung in den Fahrgastraum zu stecken. Es ist demnach denkbar, daß zwischen dem äußeren Rand des Trennelements und dem Rand der Öffnung ein schmaler Spalt verbleibt. Dies bietet die Möglichkeit, die äußere Kontur der Trennwand freier, also relativ unabhängig von dem exakten Verlauf des Randes der Öffnung zu wählen. So kann die Kontur des Trennelements derart gewählt werden, das sie die Öffnungen verschiedener Bauarten eines Fahrzeugtyps verschließen kann. Damit kann ein derart ausgestaltetes Trennelement universell für verschiedene Bauarten eines Fahrzeugtyps verwendet werden.

Die abdichtende Wirkung eines für verschiedene Bauarten eines Fahrzeugtyps ausgestalteten Trennelements wird erhöht, wenn der umfangsseitige Rand des Trennelements elastisch ausgestaltet ist. Beispielweise kann der Rand aus Schaumstoff oder elastischem Kunststoffmaterial hergestellt werden.

Bevorzugt ist das Trennelement als Trennwand ausgebildet. Trennwände sind hinreichend formstabil, so daß sie die Öffnung auch bei aktiver Belastung durch das gegen sie drückende Tier ausreichend verschließen. Ferner können Trennwände relativ dünn ausgestaltet werden, so daß das Volumen des Gepäckraums durch das Trennelement nur unwesentlich verkleinert wird.

Um bei vorhandenem Trennelement die im Gepächraum angeordneten Einbauteile wie Lautsprecher oder Luftaustritte der Lüftung auch für den Fahrgastraum sinnvoll nutzen zu können, ist es zweckmäßig, die Trennwand mit Bereichen auszustatten, die eine Anzahl von Löchern aufweisen, die den Fahrgastraum mit dem Gepäckraum verbinden, und die mit einem an der Trennwand befestigten, lösbaren Abdeckmittel abgedeckt sind.

Durch die beispielsweise in Form des Lautsprechers ausgestalteten, mit Löchern versehenen und im Bereich der Position des Lautsprechers angeordneten Bereiche können die Schallwellen nahezu ungehindert in den Fahrgastraum gesandt werden. Das lösbare Abdeckmittel dient dazu, bei Fahrzeugen, die derartige Einbauteile nicht aufweisen, die mit Löchern versehenen Bereiche zu verschließen und abzudichten.

Um die Benutzung des Fahrzeugs auch für Fahrten zu ermöglichen, bei denen das Tier nicht transportiert werden soll und bei denen das Trennelement störend wirken könnte, beispielsweise wenn die Rückenlehne des Kombis zum Transport von großvolumigen Stücken umgeklappt werden soll, ist es zweckmäßig, das Trennelement lösbar in dem Fahrzeug zu befestigen. Auf diese Weise kann das Trennelement rasch entfernt werden, so daß der Fahrzeugbesitzer durch den Einsatz eines derartigen Trennelements nicht von der andersweitigen Nutzung seines Fahrzeugs gehindert wird.

Bevorzugt besteht das Trennelement aus splitterfreiem Kunststoff. Insbesondere bei einem Unfall, beispielsweise einem Auffahrunfall, ist es aus Sicherheitsaspekten wichtig, daß das Trennelement das durch den Aufprall nach vorne geschleuderte Tier aus dem Fahrgastraum fernhält. Sollte das Trennelement jedoch aufgrund der übermäßigen Belastung trotzdem zerstört werden, so ist es zur Vermeidung unnötiger Schnittverletzungen zweckmäßig, daß das Trennelement splitterfrei zerbricht. Die Wahl eines geeigneten Kunststoffs kann diese Anforderung auf kostengünstige Weise erfüllen. Zudem kann die Kontur des Trennelements beim Einsatz von Kunststoff auf einfache Weise durch Laserschneiden hergestellt werden.

Um das Fahrzeug auch mit eingebautem Trennelement weiterhin gut manövrieren zu können, insbesondere den Blick nach hinten nicht zu behindern, ist es zweckmäßig, in dem Trennelement wenigstens ein Fenster vorzusehen. Diese Fenster besteht bevorzugt aus durchsichtigem Kunststoff.

Alternativ ist es denkbar, das gesamte Trennelement aus durchsichtigem Kunststoff herzustellen.

Zur einfachen Befestigung des Trennelements in dem Fahrzeug ist es zweckmäßig, daß das Trennelement Eingriffsmittel für Befestigungsmittel aufweist, mittels derer das Trennelement an einem den Gepäckraum zum Fahrgastraum abschließenden Fangnetz oder -gitter gehalten wird. Diese Eingriffsmittel können beispielsweise Haken, Ösen oder Muttern sein, in die entsprechend ausgestaltete Befestigungsmittel, beispielsweise Bänder oder Schrauben eingreifen. Ebenso ist es möglich, daß das Trennelement Ausnehmungen für die Aufnahme eines von dem Fangnetz oder - gitter gehaltenen Befestigungsbandes, beispielsweise eines Klettbandes, aufweist.

Auf besonders einfache Weise kann das Trennelement in seiner die Öffnung verschließenden Position gehalten werden, wenn das Trennelement zwischen einer Rückenlehne einer Rückbank und einem den Gepäckraum zum Fahrgastraum hin abschließenden Fangnetz angeordnet ist und eine Öffnung zwischen der Oberkante der Rückenlehne und dem Dachhimmel des Fahrzeugs verschließt. Insbesondere können bei einer derartigen Befestigungsweise des Trennelements die bei den oben genannten Fahrzeugen regelmäßig für die Befestigung des Fangnetzes vorgesehenen Befestigungselemente genutzt werden, ohne daß für die Befestigung des Trennelements weitere Befestigungselemente vorgesehen werden müßten.

Dies gilt besonders bevorzugt dann, wenn das Trennelement die Rückseite der Rückenlehne im wesentlichen abdeckt und mittels des Fangnetzes gegen die Rückenlehne gehalten wird. Das Trennelement kann dann als Trennwand ausgebildet sein, die den gesamten vertikalen Querschnitt des Innenraums hinter der Rückenlehne verschließt und durch das im Verhältnis zur Rückenlehne dahinter aufgespannte Fangnetz in seiner Position hinter der Rückenlehne gehalten wird.

Bei einem derart ausgestalteten Trennelement ist es zweckmäßig, in dem die Rückenlehne abdeckenden Teil des Trennelements eine Aussparung für eine in der Rückenlehne vorgesehene Durchreiche, beispielsweise für einen Skisack vorzusehen. Auf diese Weise kann die Durchreiche auch bei installiertem Trennelement zweckgerichtet genutzt werden.

Alternativ kann das Trennelement derart ausgestaltet sein, daß seine Form im wesentlichen der Form der von ihm verschlossenen Öffnung entspricht. Das im Vergleich zu einem die Rückenlehne der Rückbank mitabdeckenden Trennelement baukleinere Trennelement ist mit geringerem Materialaufwand herzustellen. Eine Fixierung dieses Trennelements erfolgt über Befestigungselemente, die am Rand der zu verschließenden Öffnung eingreifen.

Vorzugsweise verbinden diese Befestigungselemente das Trennelement mit der Rückenlehne der Rückbank und/oder dem Dachhimmel des Fahrzeugs. Als Befestigungspunkte können hierbei bereits im Serienfahrzeug vorgesehene Bauteile vorgesehen werden, beispielsweise die an der Rückenlehne vorgesehenen Kopfstützen, die im hinteren Teil des Fahrgastraums vorgesehenen Haltegriffe oder die Befestigungspunkte für üblicherweise in derartigen Fahrzeugen vorgesehene Fangnetze. Ergänzend kann das Trennelement zudem noch durch das Fangnetz gehalten werden.

Die vorliegende Erfindung wird im folgenden anhand von zwei Ausführungsbeispielen näher erläutert, wobei auf die Zeichnung bezug genommen wird. In der Zeichnung zeigen:
- Fig. 1: ein Ausführungsbeispiel des Trennelements im nicht eingebauten Zustand in einer Ansicht von hinten,
- Fig. 2: das Ausführungsbeispiel gemäß Fig. 1 im eingebauten Zustand in einer perspektivischen Ansicht von hinten,
- Fig. 3: das eingebaute Ausführungsbeispiel gemäß Fig. 2 gehalten durch ein Fangnetz in einer perspektivischen Ansicht von hinten,
- Fig. 4: ein weiteres Ausführungsbeispiel des Trennelements im eingebauten Zustand in einer perspektivischen Ansicht und
- Fig. 5: ein drittes Ausführungsbeispiel des Trennelements in einer Ansicht von hinten.

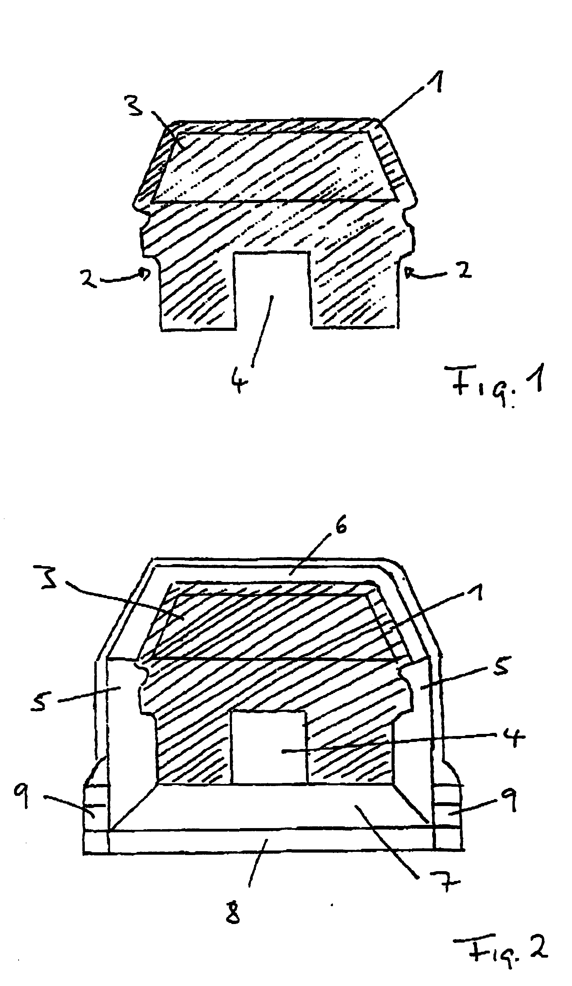

Das in Fig. 1 dargestellte Trennelernent 1 ist nach Art einer Trennwand ausgeführt. Die äußere Kontur des Trennelements 1 ist dabei an die Form der von ihm zu verschließenden Öffnung und den sonstigen von ihm gefüllten Teil des Querschnitts des Fahrzeuginnenraums angepaßt. So weist das Trennelement 1 beispielsweise Rücksprünge 2 auf, die an die Form der in den Fahrzeuginnenraum hineinragenden Radkästen angepaßt sind.

Das Trennelement 1 ist aus splitterfreiem Kunststoff gefertigt.

Das Trennelement 1 weist ein Fenster 3 auf. Das Fenster 3 hat annähernd die gleiche Form wie die von dem Trennelement abzudeckende Öffnung. Das Fenster ist aus durchsichtiger Kunststoffolie gefertigt.

Ferner ist in dem Trennelement 1 eine Aussparung 4 vorgesehen. Die Form der Aussparung 4 entspricht der Form einer Durchreiche, die in der von dem Trennelement 1 ebenfalls abgedeckten Rückenlehne einer Rückbank des Fahrzeuges vorgesehen ist.

Fig. 2 zeigt eine perspektivische Ansicht eines Fahrzeugs von hinten mit eingebautem Trennelement 1. Fig. 2 zeigt die den Gepäckraum umgebenden Seitenwände 5, den Dachhimmel 6 und den Boden 7. Ferner sind die Ladekante 8 und die Rücklichter 9 des Fahrzeugs dargestellt.

Das Trennelement 1 ist in den von den Seitenwänden 5, dem Dachhimmel 6 und dem Boden 7 umgrenzten vertikalen Querschnitt des Innenraums des Fahrzeugs eingepaßt. In seiner eingebauten Position steht das Trennelement 1 direkt rückwärtig einer nicht dargestellten Rückenlehne einer Rückbank des Fahrzeugs. Das Trennelement 1 deckt mit seinem unteren Teil die Rückseite der Rückenlehne und mit seinem oberen Teil die zwischen der Oberkante und dem Dachhimmel 6 verbleibende Öffnung zwischen dem Gepäckraum und dem vor der Rückenlehne liegenden Fahrgastraum ab.

Die äußere Kontur des Trennelements 1 entspricht dem durch die Seitenwände 5, dem Dachhimmel 6 und dem Boden 7 umgrenzten Querschnitt des Fahrzeuginnenraums, so daß kein nennenswerter Spalt zwischen dem Trennelement 1 und den Fahr zeuginnenwänden verbleibt.

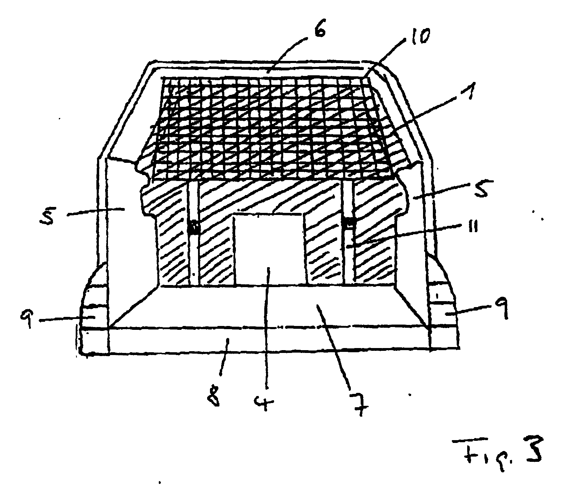

Fig. 3 zeigt zusätzlich zu den in Fig. 2 beschriebenen und in Fig. 3 mit gleichen Bezugszeichen versehenen Elementen ein Fangnetz 10. Das Fangnetz 10 ist mit Befestigungsriemen 11 zwischen nicht dargestellten, im Boden 7 vorgesehenen Ösen und im Dachhimmel 6 vorgesehenen, ebenfalls nicht dargestellten Befestigungselementen verspannt. Dabei ist das Fangnetz 10 derart dicht hinter der Rückenlehne des Fahrzeugs aufgespannt, daß es das hinter der Rückenlehne stehende Trennelement 1 in dieser Position festhält.

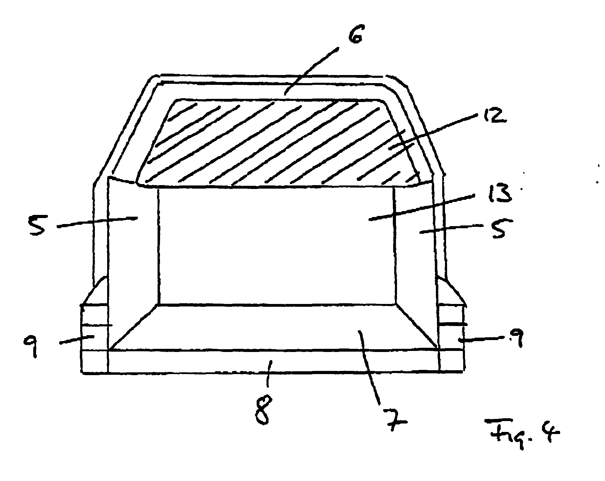

Das in Fig. 4 unter Beibehaltung gleicher Bezugszeichen für gleiche Bauteile dargestellte weitere Trennelement 12 entspricht in seiner Form im wesentlichen der Form der zu verschließenden Öffnung. Zur Befestigung des Trennelements 12 sind an dessen Unterseite nicht dargestellte, hakenförmige Befestigungselemente angeordnet, die die Oberseite der Rückenlehne 13 der Rückbank umgreifen. Zusätzlich ist das Trennelement 12 in für die Befestigung des normalerweise in diesen Fahrzeugen vorgesehenen Fangnetzes vorgesehene, ebenfalls nicht dargestellte Haken im Dachhimmel 6 des Fahrzeugs eingehängt.

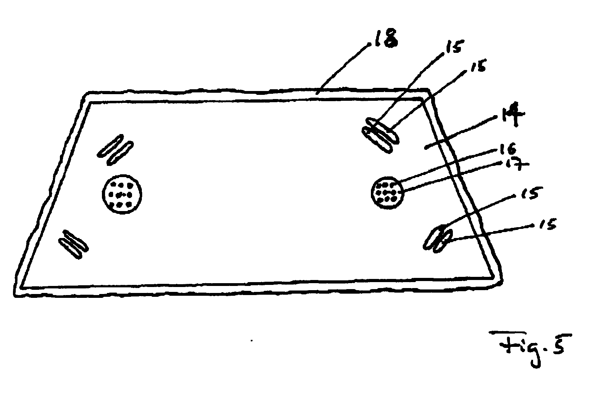

Das in Fig. 5 dargestellte Trennelement 14 ist ebenfalls als Trennwand ausgestaltet und weist, wie das in Fig. 4 dargestellte Trennelement 12, eine Form auf, die im wesentlichen der Form der zu verschließenden Öffnung entspricht. Das Trennelement 14 weist Ausnehmungen 15, mit Löchern 16 versehene Bereiche 17 und einen elastischen Rand 18 aus Schaumstoff auf.

Die Ausnehmungen 15 dienen als Eingriffsmittel für ein Klettband, mittels dem das Trennelement 14 an einem Fangnetz, wie es beispielsweise in Fig. 3 dargestellt ist, oder einem den Gepäckraum zum Fahrgastraum abschließenden Fanggitter befestigt werden kann und damit in seiner die Öffnung im wesentlichen verschließenden Position sicher fixiert wird.

Die mit Löchern 16 versehene Bereiche 17 sind mit nicht dargestellten Abdeckmitteln, beispielsweise einer aufgeklebten Folie, verschlossen. Durch Entfernen des Abdeckmittels können die Löcher 16 freigegeben werden, so daß Schallwellen eines gepäckraumseitig hinter dem Trennelement 14 angebrachten Lautsprechers in den Fahrgastraum dringen können.

Der elastische Rand 18 führt zu einer ausreichenden Abdichtung der zu verschließenden Öffnung, auch wenn das Trennelement 14 als Trennelement ausgeführt ist, das als in verschiedenen Bauarten eine Fahrzeugs einbaubares Trennelement ausgelegt ist und deshalb in seiner Form der zu verschließenden Öffnung einer jeden Bauart nicht exakt entspricht.

Durch das Trennelement 1, 12 bzw. 14 wird der Gepäckraum des Fahrzeuges zum Fahrgastraum hin dicht abgeschlossen, so daß weder Schmutz noch Geruch von dem Gepäckraum in den Fahrgastraum dringen können.

## Patentansprüche

1. Trennelement für ein Fahrzeug, insbesondere für den Fahrzeugtyp "Kombi", wobei das Fahrzeug aufgrund seines Fahrzeugtyps zwischen seinem Gepäckraum und seinem Fahrgastraum eine Öffnung aufweist, dadurch gekennzeichnet, daß das Trennelement (1,12,14) die Öffnung im wesentlichen verschließt.

2. Trennelement nach Anspruch 1, dadurch gekennzeichnet, daß das Trennelement (1,12,14) die Öffnung geruchs- und/oder schmutzdicht verschließt.

3. Trennelement nach Anspruch 1 oder 2, dadurch gekennzeichnet, daß der umfangsseitige Rand (18) des Trennelements elastisch ausgestaltet ist.

4. Trennelement nach einem der Ansprüche 1 bis 3, dadurch gekennzeichnet, daß das Trennelement (1,12,14) eine Trennwand ist.

5. Trennelement nach einem der Ansprüche 1 bis 4, dadurch gekennzeichnet, daß das Trennelement (14) einen mit einer Anzahl Löcher (16) durchstoßenen Bereich (17) aufweist, der mit einem an dem Trennelement (14) befestigten, lösbaren Abdeckmittel abgedeckt sind.

6. Trennelement nach einem der Ansprüche 1 bis 5, dadurch gekennzeichnet, daß das Trennelement (1,12,14) lösbar in dem Fahrzeug befestigt ist.

7. Trennelement nach einem der Ansprüche 1 bis 6, dadurch gekennzeichnet, daß das Trennelement (1,12,14) aus splitterfreiem Kunststoff besteht.

8. Trennelement nach einem der Ansprüche 1 bis 7, dadurch gekennzeichnet, daß das Trennelement (1) wenigstens ein Fenster (3) aufweist.

9. Trennelement nach Anspruch 8, dadurch gekennzeichnet, daß das Fenster (3) aus durchsichtigem Kunststoff besteht.

10. Trennelement nach einem der Ansprüche 1 bis 9, dadurch gekennzeichnet, daß das Trennelement (14) Eingriffsmittel für Befestigungsmittel aufweist, mittels derer das Trennelement (14) an einem den Gepäckraum zum Fahrgastraum abschließenden Fangnetz (10) oder Fanggitter gehalten ist.

11. Trennelement nach Anspruch 10, dadurch gekennzeichnet, daß das Trennelement (14) Ausnehmungen (15) für die Aufnahme eines von dem Fangnetz (10) oder Fanggitter gehaltenen Befestigungsbands aufweist.

12. Trennelement nach einem der Ansprüche 1 bis 11, dadurch gekennzeichnet, daß das Trennelement (1) zwischen einer Rückenlehne einer Rückbank und einem den Gepäckraum zum Fahrgastraum hin abschließenden Fangnetz (10) oder Fanggitter angeordnet ist und eine Öffnung zwischen der Oberkante der Rückenlehne und dem Dachhimmel (6) des Fahrzeugs verschließt.

13. Trennelement nach Anspruch 12, dadurch gekennzeichnet, daß das Trennelement (1) die Rückseite der Rükkenlehne im wesentlichen abdeckt und mittels des Fangnetzes (10) oder Fanggitters gegen die Rückenlehne gehalten wird.

14. Trennelement nach Anspruch 13, dadurch gekennzeichnet, daß das Trennelement (1) eine Aussparung (4) für eine in der Rückenlehne vorgesehene Durchreiche aufweist.

15. Trennelement nach einem der Ansprüche 1 bis 14, dadurch gekennzeichnet, daß die Form des Trennelements (12) im wesentlichen der Form der von ihm verschlossenen Öffnung entspricht und das Trennelement (12) mit Befestigungsmitteln am Rand der Öffnung befestigt ist.

16. Trennelement nach Anspruch 15, dadurch gekennzeichnet, daß das Trennelement (12) mit Befestigungsmitteln an einer Rückenlehne (13) einer Rückbank befestigt ist.

17. Trennelement nach Anspruch 15 oder 16, dadurch gekennzeichnet, daß das Trennelement (12) mit Befestigungsmitteln am Dachhimmel (6) des Fahrzeugs befestigt ist.
